(19) Europäisches Patentamt

European Patent Office

Office européen des brevets

(11) **EP 4 621 656 A1**

(12) **EUROPEAN PATENT APPLICATION**

(43) Date of publication:
24.09.2025 Bulletin 2025/39

(21) Application number: 25154469.8

(22) Date of filing: 28.01.2025

(51) International Patent Classification (IPC):
*G06N 3/09* (2023.01)

(52) Cooperative Patent Classification (CPC):
G06N 3/09

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 21.03.2024 CN 202410330911

(71) Applicants:
• **Beijing Youzhuju Network Technology Co., Ltd.
Beijing 101299 (CN)**
• **Lemon Inc.
Grand Cayman, KY1-1205 (KY)**

(72) Inventors:
• **HUANG, Luyang
Beijing, 100028 (CN)**
• **KANG, Liyan
Beijing, 100028 (CN)**
• **PAN, Xingyuan
Beijing, 100028 (CN)**
• **CHENG, Shanbo
018960 Singapore (SG)**

(74) Representative: **Isarpatent
Patent- und Rechtsanwälte
Barth Hassa Peckmann & Partner mbB
Friedrichstraße 31
80801 München (DE)**

(54) **METHOD AND APPARATUS FOR DETERMINING TRAINING SAMPLE, MEDIUM, ELECTRONIC DEVICE AND PROGRAM PRODUCT**

(57) The present disclosure relates to a method and apparatus for determining a training sample, a medium, an electronic device and a program product, which relate to the field of computer technologies. The method includes acquiring a plurality of candidate training samples and a standard training sample; for each candidate training sample, determining an influence degree of the candidate training sample relative to the standard training sample according to a preset influence function; and determining a target training sample from the plurality of candidate training samples according to the influence degree. High-quality training data beneficial to the training of the machine learning model can be obtained through screening without relying on an external evaluation model, thereby greatly improving the screening efficiency of the training sample and the training efficiency of the machine learning model.

Fig.1

**Description**

CROSS-REFERENCE TO RELATED APPLICATION(S)

The present disclosure claims priority of the Chinese Patent Application No. 202410330911.4 filed on March 21, 2024, the disclosure of which is incorporated herein by reference in its entirety as part of the present application.

TECHNICAL FIELD

The present disclosure relates to the field of computer technologies, and in particular, to a method and apparatus for determining a training sample, a medium, an electronic device and a program product.

BACKGROUND

During instruction fine-tuning of a model, the model is often optimized in two dimensions: data quantity and data quality. In the related art, high-quality training data is generally selected manually, or the high-quality training data is selected by a quality evaluation model, which leads to low efficiency in screening the high-quality training data or a reliance on an external model.

SUMMARY

This Summary is provided to introduce concepts in a simplified form that are described in detail in the following Detailed Description section. This Summary section is not intended to identify key features or essential features of the claimed technical solution, nor is it intended to be used to limit the scope of the claimed technical solution.

In a first aspect, the present disclosure provides a method for determining a training sample, including:

acquiring a plurality of candidate training samples and a standard training sample, wherein the candidate training sample includes one of a text-type sample, an image-type sample, and an audio-type sample;

for each candidate training sample, determining, according to a preset influence function, an influence degree of the candidate training sample relative to the standard training sample, wherein the influence function is a function representing a relationship between the influence degree with a first loss of a machine learning model on the candidate training sample and a second loss of the machine learning model on the standard training sample; and

determining a target training sample from the plurality of candidate training samples according to the influence degree, wherein the target training sample is used for training the machine learning model.

In a second aspect, the present disclosure provides an apparatus for determining a training sample, including:

an obtaining module configured to obtain a plurality of candidate training samples and a standard training sample, wherein the candidate training sample includes one of a text-type sample, an image-type sample, and an audio-type sample;

a first determination module configured to, for each candidate training sample, determine, according to a preset influence function, an influence degree of the candidate training sample relative to the standard training sample, wherein the influence function is a function representing a relationship between the influence degree with a first loss of a machine learning model on the candidate training sample and a second loss of the machine learning model on the standard training sample; and

a second determination module configured to determine a target training sample from the plurality of candidate training samples according to the influence degree, wherein the target training sample is used for training the machine learning model.

In a third aspect, the present disclosure provides a computer-readable medium having computer programs stored thereon, wherein the computer programs, when executed by a processing apparatus, implement the method according to the first aspect.

In a fourth aspect, the present disclosure provides an electronic device, including:

a storage apparatus having computer programs stored thereon;

a processing apparatus configured to execute the computer programs in the storage apparatus to implement the method according to the first aspect.

In a fifth aspect, the present disclosure provides a computer program product including computer programs, wherein the computer programs, when executed by a processor, implement the method according to the first aspect.

BRIEF DESCRIPTION OF DRAWINGS

The above and other features, advantages and aspects of the embodiments of the present disclosure will become more apparent in conjunction with the drawings and with reference to the following specific embodiments. Throughout the drawings, the same or similar reference numbers denote the same or similar elements. It should be understood that the drawings are schematic and that the components and elements are not necessarily drawn to scale. In the drawings:

Fig. 1 is a flowchart of a method for determining a training sample according to some embodiments;

Fig. 2 is a detailed flowchart of a step 130 shown in Fig. 1;

Fig. 3 is a flowchart of a method for determining a training sample according to some embodiments;

Fig. 4 is a schematic diagram of the effect of the method for determining a training sample according to some embodiments;

Fig. 5 is a schematic structural diagram of an apparatus for determining a training sample according to some embodiments; and

Fig. 6 is a schematic structural diagram of an electronic device according to some embodiments.

DETAILED DESCRIPTION

Embodiments of the present disclosure will be described in more detail below with reference to the drawings. While certain embodiments of the present disclosure are shown in the drawings, it should be understood that the present disclosure may be embodied in various forms and should not be construed as limited to the embodiments set forth herein. Rather, these embodiments are provided for a thorough and complete understanding of the present disclosure. It should be understood that the drawings and embodiments of the present disclosure are only used for illustrative purposes and are not intended to limit the scope of protection of the present disclosure.

It should be understood that the various steps described in the implementations of modes of the method the present disclosure may be performed in different orders and/or in parallel. Furthermore, the implementation modes of the method may include additional steps and/or steps omitted or unshown. The scope of the present disclosure is not limited in this regard.

As used herein, the term "include" and variations thereof are open-ended inclusions, that is, "include but not limited to". The term "based on" is "based at least in part on". The term "an embodiment" means "at least one embodiment"; the term "another embodiment" means "at least one other embodiment"; and the term "some embodiments" means "at least some embodiments". Related definitions of other terms will be given in the description below.

It should be noted that concepts such as "first" and "second" mentioned in the present disclosure are only used to distinguish different apparatuses, modules or units, and are not intended to limit the order or the interdependence relationship of functions performed by these apparatuses, modules or units.

It should be noted that the modifiers "one" and "more" mentioned in the present disclosure are illustrative rather than restrictive, and those skilled in the art should understand that unless the context clearly indicates otherwise, they should be understood as "one or more".

The names of messages or information exchanged between apparatuses in the embodiments of the present disclosure are only used for illustrative purposes, and are not used to limit the scope of these messages or information.

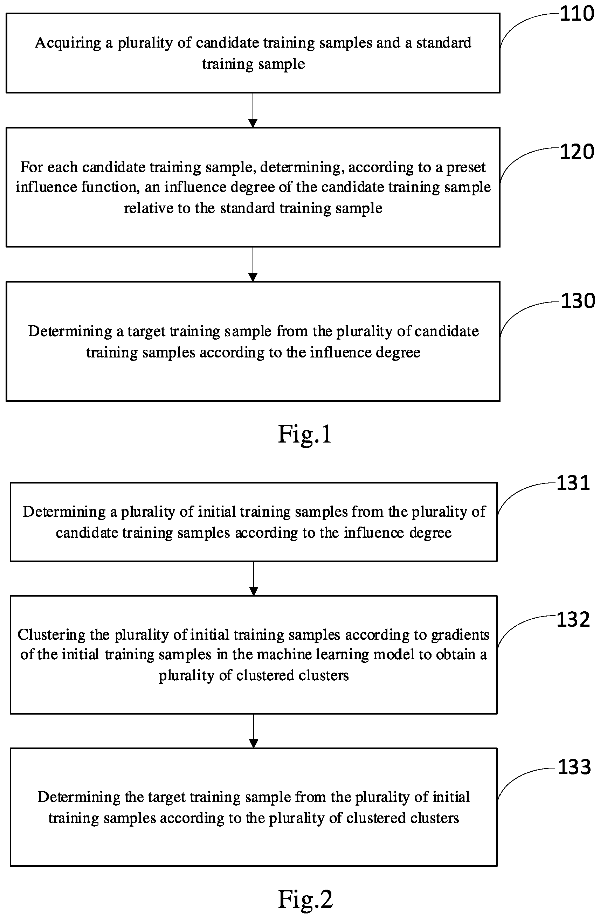

Fig. 1 is a flowchart of a method for determining a training sample according to some embodiments. As shown in Fig. 1, an embodiment of the present disclosure provides a method for determining a training sample. The method may be performed by an electronic device, and may specifically be performed by an apparatus for determining a training sample. The apparatus may be implemented in software and/or hardware, and is configured in the electronic device. As shown in Fig. 1, the method may include the following steps.

In step 110, a plurality of candidate training samples and a standard training sample are acquired.

Here, the standard training sample may refer to a high-quality training sample that has a positive impact on the training of the machine learning model. Exemplarily, the standard training sample may be a manually selected training sample. It should be understood that the number of standard training samples may be one or more. The plurality of candidate training samples may be training samples to be selected from a dataset.

The candidate training sample includes one of a text-type sample, an image-type sample, and an audio-type sample. For example, when a machine learning model of an image type is trained, the training sample may be an image-type sample; when a machine learning model of an audio type is trained, the training sample may be an audio sample; and when a machine learning model of a text type is trained, the training sample may be a text sample.

That is, the method for determining a training sample provided in the embodiment of the present disclosure may be applied to sample data screening of any type of machine learning model. Taking a large language model as an example, the candidate training sample may be a text sample.

In step 120, for each candidate training sample, an influence degree of the candidate training sample relative to the standard training sample is determined according to a preset influence function.

Here, the influence function is a function representing a relationship between the influence degree with a first loss of the machine learning model on the candidate training sample and a second loss of the machine learning model on the standard training sample.

The first loss of the machine learning model on the candidate training sample may refer to a loss between an output result of the machine learning model for the candidate training sample and a label of the candidate training sample. The candidate training sample may be input into the machine learning model, and the first loss between the output of the machine learning model and the label of the candidate training sample may be calculated by a loss function. The second loss of the machine learning model on the standard training sample may refer to a loss between an output result of the machine learning model for the standard training sample and a label of the standard training sample. The standard training sample may be input into the machine learning model, and the second loss between the output of the machine learning model and the label of the standard training sample may be calculated by the loss function.

Exemplarily, the first loss and the second loss may be negative log-likelihood loss functions, of course, may also be other loss functions, such as a cross-entropy loss function, a mean squared error loss function, and so on. For example, the first loss and the second loss may be calculated by the following loss function:

$$L(x, y) = -logP(y|x) = -log \prod_{j=1}^{T} p(x^j|y, x < j)$$

where x is the candidate training sample, y is a true label of the candidate training sample, $x^j$ is a jth token (word unit) of the candidate training sample x, T represents the number of samples in the dataset, $L(x, y)$ represents a loss value, $P(y|x)$ represents a probability distribution of an output y predicted by the machine learning model when x is an input, and $p(x^j|y, x < j)$ represents a conditional probability of the jth sample.

It should be understood that since the influence function represents the relationship between the influence degree with the first loss and the second loss, the influence degree of the candidate training sample on the standard training sample can be calculated through the influence function, and then the role of the candidate training sample in the training process of the machine learning model can be determined through the influence degree.

It should be noted that since the standard training sample is a high-quality training sample that is pre-selected and may have a positive impact on the machine learning model, by constructing the influence function representing the relationship between the influence degree with the first loss and the second loss, , candidate training samples that can exert a beneficial influence on the standard training sample may be selected from the plurality of candidate training samples through the influence function, to obtain high-quality training samples that have a favorable impact on the training of the machine learning model.

In step 130, a target training sample is determined from the plurality of candidate training samples according to the influence degree.

Here, after the influence degree corresponding to each candidate training sample is obtained, a candidate training sample favorable for the training of the machine learning model is selected from the plurality of candidate training samples as the target training sample according to the influence degree corresponding to each candidate training sample.

It should be understood that a value of the influence degree represents an impact on a prediction effect of the standard training sample after the candidate training sample is added to the training dataset.

It should be noted that the target training sample is used for training the machine learning model. That is, the machine learning model may be trained by using the target training sample selected from the plurality of candidate training samples, so that the machine learning model can make more accurate predictions.

Therefore, the plurality of candidate training samples and the standard training sample are acquired, the influence degree of the candidate training sample relative to the standard training sample is determined for each candidate training sample according to the preset influence function, and the target training sample is determined from the plurality of candidate training samples according to the influence degree. In this way, high-quality training data beneficial to the training of the machine learning model can be obtained by screening without relying on an external evaluation model, thereby greatly improving the screening efficiency of the training sample and the training efficiency of the machine learning model.

In some possible implementations, the influence function is a function representing a relationship between the influence degree with a gradient of the first loss calculated for the candidate training sample at an optimal parameter of a model parameter of the machine learning model, a gradient of the second loss calculated for the standard training sample at the optimal parameter of the model parameter of the machine learning model, and a Hessian matrix corresponding to the machine learning model.

Here, the gradient refers to a direction in which a loss function decreases the fastest. In a model update process, it is generally to find a direction in which the loss function decreases the fastest, multiply it by a set learning step, and add or subtract the learning step from an old model to obtain an updated model. It should be understood that the gradient is actually a vector representing a direction, and has the same shape as the loss function, and an element at each position in the gradient represents a rate of change of an element at a corresponding position of the loss function relative to a weight. Therefore, the gradient of the first loss calculated for the candidate training sample at the optimal parameter of the model parameter of the machine learning model reflects how a slight change in the model parameter of the machine learning model may affect the loss of the candidate training sample, and the gradient of the second loss calculated for the standard training sample at the optimal parameter of the model parameter of the machine learning model reflects how a slight change in the machine learning model may affect the loss of the standard training sample.

The Hessian matrix refers to a second-order partial derivative of a loss function with respect to a model parameter at an optimal parameter, which reflects model curvature information. The positive definiteness of the Hessian matrix may help to determine a local minimum point.

In some embodiments, the Hessian matrix is a Kronecker-factored approximate curvature (K-FAC) corresponding to the machine learning model.

The K-FAC may decompose the Hessian matrix of the entire machine learning model into a plurality of smaller, manageable Kronecker products by using structural characteristics of a neural network weight matrix, especially the independence and linearity between layers. That is, the K-FAC may combine gradient statistics of input and output at each layer in the machine learning model to form a matrix in the form of the Kronecker product, which is used as an approximation of the original Hessian matrix. By using the K-FAC, the calculation and storage costs can be greatly reduced, while providing sufficiently accurate curvature information to improve the performance of the optimization algorithm.

In the optimization of the machine learning model, the goal is to find an optimal parameter of the model parameter to minimize an expected value of the loss function. The optimization of the machine learning model may be represented by the following calculation formula:

$$\theta^* = \underset{\theta}{arg\,min}\frac{1}{n}\sum_{i=1}^{n}L(z_i|\theta)$$

where $\theta^*$ is the optimal parameter of the machine learning model, $\theta$ is the model parameter of the machine learning model, n is the number of training samples, and $L(z_i|\theta)$ represents the loss of the loss function for the ith training sample $z_i$ under the condition of the model parameter $\theta$, and argmin represents solving the minimum value.

With the above influence function, the sensitivity of the machine learning model to the candidate training sample may be quantified by the gradient. By calculating the influence function, the influence degree of the candidate training sample on the standard training sample may be obtained, so as to intuitively understand the role of each candidate training sample in the training process of the machine learning model, thereby screening high-quality training samples to adjust the machine learning model.

In some embodiments, the influence function is:

$$\mathcal{L}(z_m, z_t) = -\nabla_{\theta|\theta^*}L(z_t)^T H_{\theta^*}^{-1}\nabla_{\theta|\theta^*}L(z_m)$$

where $\mathcal{L}(z_m, z_t)$ is the influence degree, $z_m$ is the candidate training sample, $z_t$ is the standard training sample, $\theta$ is the model parameter of the machine learning model, $\theta^*$ is the optimal parameter of the machine learning model, $L(z_t)$ is the second loss, $\nabla_{\theta|\theta^*}L(z_t)$ represents the gradient of the second loss calculated for the standard training sample at the optimal parameter $\theta^*$ of the model parameter $\theta$, $H_{\theta^*}$ is the Hessian matrix, $L(z_m)$ is the first loss, and $\nabla_{\theta|\theta^*}L(z_m)$ represents the gradient of the first loss calculated for the candidate training sample at the optimal parameter $\theta^*$ of the model parameter $\theta$.

It should be understood that in the above influence function, the influence degree of the candidate training sample on the standard training sample is essentially obtained by calculating an inverse product of the gradient of the standard training sample and the Hessian matrix, and then multiplying it by a transpose of the gradient of the candidate training sample.

Therefore, with the above influence function, the influence degree of the candidate training sample on the standard training sample can be accurately quantified without relying on the external model, thereby helping the user to quickly select high-quality training data, greatly improving the training efficiency of the machine learning model.

In some possible implementations, in step 130, a candidate training sample with an influence degree being a target influence degree may be selected from the plurality of candidate training samples as the target training sample, according to the influence degree.

Here, the target influence degree represents that training the machine learning model on the candidate training sample can reduce the second loss of the machine learning model on the standard training sample.

As shown in the above influence function, when $\mathcal{L}(z_m, z_t)$ is a negative value, it means that training the machine learning model on the candidate training sample can reduce the second loss of the machine learning model on the standard training sample. That is, when $\mathcal{L}(z_m, z_t)$ is a negative value, the loss of the machine learning model on the standard training sample can be reduced by training the machine learning model with the corresponding candidate training sample, which means that the candidate training sample is favorable for the machine learning model to generate the standard training sample.

Therefore, a candidate training sample with an influence degree being a negative value among the plurality of candidate training samples may be used as the target training sample.

Therefore, with the above implementation, a training sample that exerts a beneficial influence on the standard training sample can be quickly selected from the plurality of candidate training samples according to the influence degree.

Fig. 2 is a detailed flowchart of step 130 shown in Fig. 1. As shown in Fig. 2, step 130 may include the following steps.

In step 131, a plurality of initial training samples are determined from the plurality of candidate training samples according to the influence degree.

Here, the initial training sample is determined in the same way as the target training sample is determined in the above embodiment, and details are not repeated here.

It should be noted that the initial training sample is high-quality training data that is selected from the plurality of candidate training samples, which is helpful to the training of the machine learning model.

In step 132, the plurality of initial training samples are clustered according to gradients of the initial training samples in the machine learning model to obtain a plurality of clustered clusters.

Here, the gradients of the initial training samples in the machine learning model may refer to a gradient, with respect to the last layer of multilayer perceptron (MLP) of the machine learning model, of a model output of the machine learning model for the initial training sample. The gradient reflects the sensitivity of the model parameter of the machine learning model to a loss change.

Exemplarily, the gradient may be used as a feature representation of each initial training sample, Euclidean distance is used as a similarity measure, and clustering is performed by a K-means clustering algorithm. Initial training samples with similar gradient features are divided into the same clustered cluster, to obtain a plurality of clustered clusters.

It should be understood that the Euclidean distance may measure the difference between two feature representations. The smaller the Euclidean distance, the closer the gradient features of the two initial training samples.

In some embodiments, in a case where the initial training sample is sequence data, a gradient of each word unit of the initial training sample in the machine learning model may be determined, and the gradient of the initial training sample in the machine learning model may be determined according to an average value of gradients of all the word units in the machine learning model.

The sequence data may refer to sequence data such as text, audio, and video. In deep learning, when processing sequence data, the machine learning model generally calculates a gradient for each word unit (token) in the sequence data.

The gradient for each word unit in the initial training sample in the machine learning model may be calculated by a backpropagation algorithm. Then, the gradients corresponding to all the word units are summed along a sequence dimension and divided by a sequence length to obtain the average value of the gradients, in the machine learning model, of all the word units. Then, the average value is used as the gradient of the initial training sample in the machine learning model.

It should be understood that by averaging the gradient of each word unit, the overall feature of the entire sequence of the initial training sample may be extracted to weaken the impact of a single word unit.

In other implementations, random projection may be used to reduce a dimension of the gradient to 400, to accelerate the clustering and reduce the memory occupation.

In step 133, the target training sample is determined from the plurality of initial training samples according to the plurality of clustered clusters.

Here, after the plurality of clustered clusters are obtained, one or more initial training samples may be selected from the initial training sample corresponding to each clustered cluster as the target training sample.

In some possible implementations, for each clustered cluster, a target number of initial training samples may be collected from the initial training samples corresponding to the clustered cluster as the target training sample.

The target number may be set by the user according to actual needs, such as 5, 10, etc. By collecting the target number of initial training samples from the initial training sample corresponding to each clustered cluster as the target training sample, it can perform uniform sampling from the clustering results, and obtain training data with different gradient features, thereby ensuring the diversity of the training data.

Therefore, through the above implementation, the diversity of the screened target training samples can be improved, thereby maximizing the diversity of the impact of the training samples on the machine learning model.

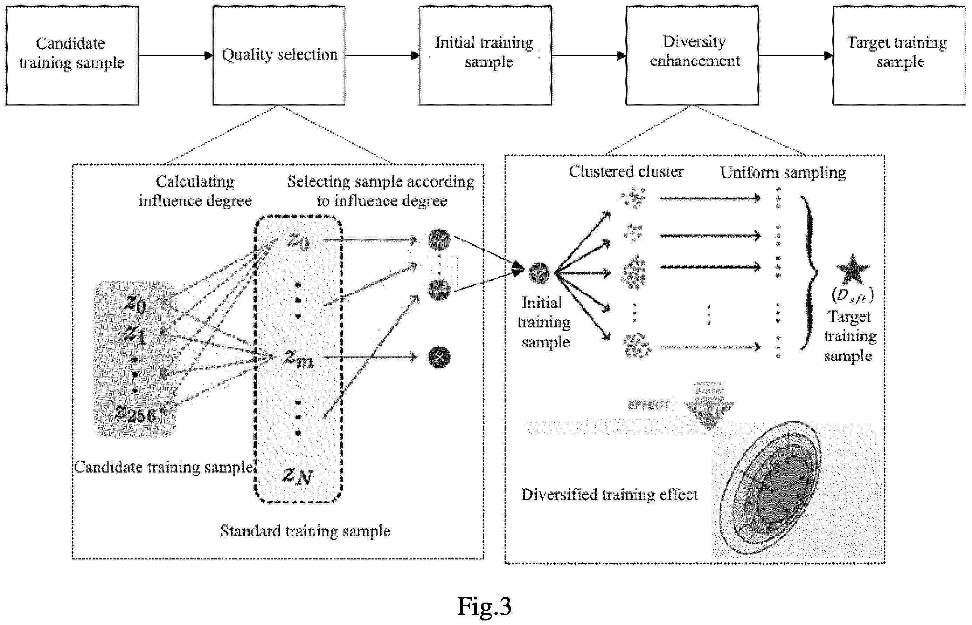

Fig. 3 is a flowchart of a method for determining a training sample according to some embodiments. As shown in Fig. 3, a quality selection operation is performed on a candidate training sample to obtain an initial training sample, and a diversity enhancement operation is performed on the initial training sample to obtain a target training sample. The quality selection operation may be calculating the influence degree between the candidate training sample and a standard training sample through the influence function, and then selecting the initial training sample from the candidate training sample according to the influence degree. The diversity enhancement operation may be clustering the selected initial training sample according to a gradient of the initial training sample to obtain a plurality of clustered clusters, and then performing uniform sampling from the plurality of clustered clusters to obtain the target training sample.

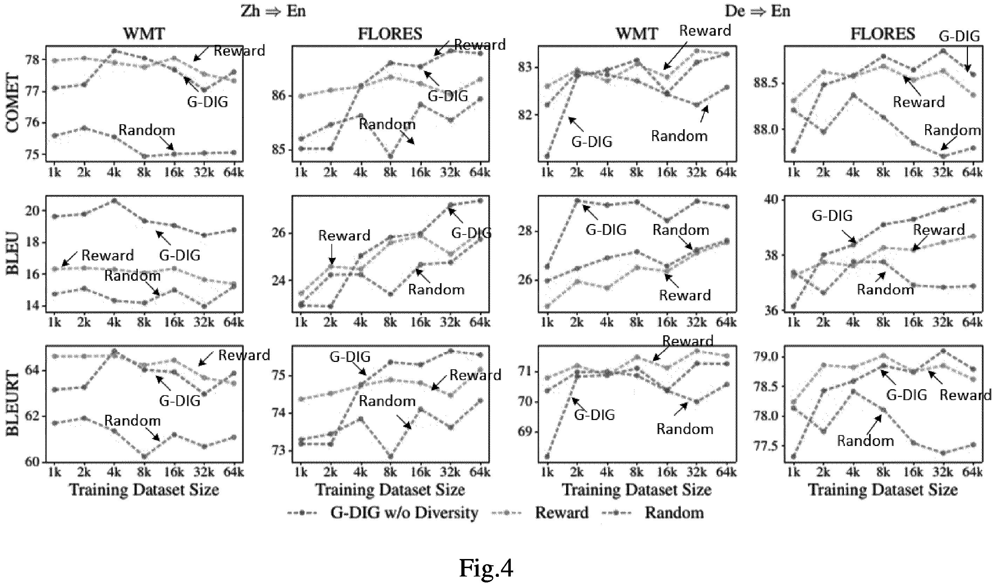

Fig. 4 is a schematic diagram of the effect of the method for determining a training sample according to some embodiments. As shown in Fig. 4, in the translation of Zh-En (Chinese-English) and De-En (German-English), the model comparison results of different Training Dataset Sizes selected by the method for determining a training sample (corresponding to G-DIG in the figure) based on the embodiments of the present disclosure, a reward model selection (corresponding to Reward in the figure), and a random selection training (corresponding to Random in the figure) are shown in Fig. 4. Obviously, in the translation of Zh-En, the method proposed in the embodiments of the present disclosure can achieve better results than the method based on the reward model. In the translation of De-En, the method proposed in the embodiments of the present disclosure is significantly better than the reward model in terms of BLEU.

The WMT (Workshop on Machine Translation) dataset in Fig. 4 contains multiple language pairs and supports multiple translation tasks, such as translation from English to multiple other languages, and translation between low-resource languages. The FLORES (Facebook Low Resource Machine Translation Evaluation) in Fig. 4 is an evaluation benchmark specifically for low-resource language translation. This dataset is designed to assess and promote the ability to perform high-quality translations between languages with scarce resources, especially in those language scenarios where training data is limited. FLORES includes multiple sub-tasks and datasets, such as FLORES-101, which cover translation tasks between multiple language pairs.

BLEU (Bilingual Evaluation Understudy) is a machine translation evaluation indicator that evaluates the quality of a translation by calculating the accuracy between a candidate sentence generated by a translation system and a reference sentence. COMET (Consensus-based Machine Translation Evaluation) is a neural network-based translation quality assessment model that uses a pre-trained language model to predict the similarity between a given translation and a reference text, and may better capture the context and overall quality of the translation. BLEURT (Bilingual Evaluation Understudy with Reformulation-based Training) is an evaluation indicator that indicates to address the shortcomings of BLEU in evaluating the fluency, appropriateness, and overall quality of translation, and provide a score that is closer to human evaluation standards.

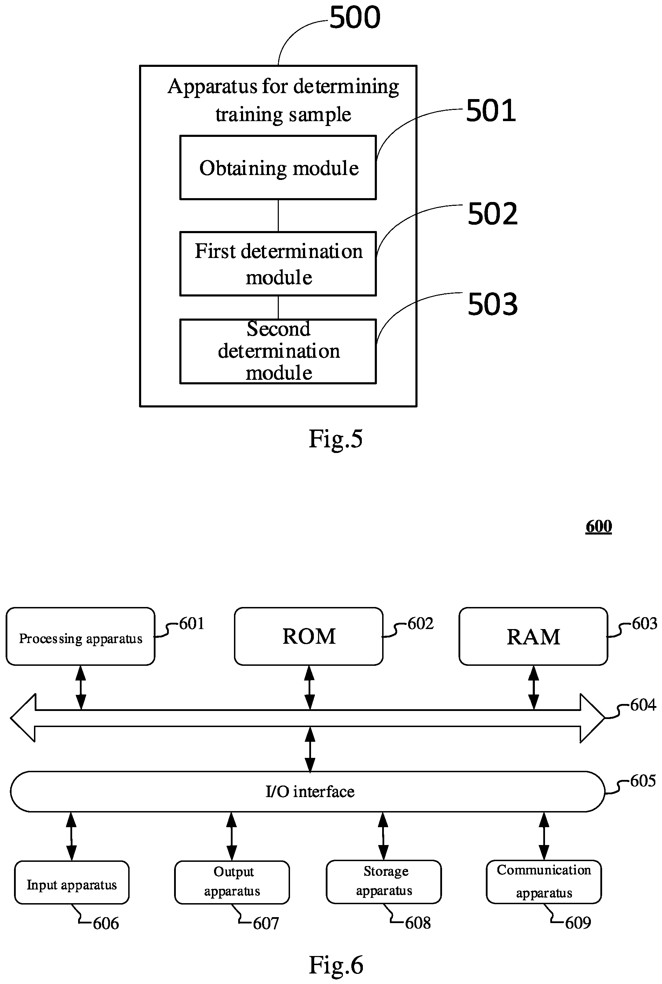

Fig. 5 is a schematic structural diagram of an apparatus for determining a training sample according to some embodiments. As shown in Fig. 5, an embodiment of the present disclosure provides an apparatus 500 for determining a training sample. The apparatus 500 for determining a training sample includes:

an obtaining module 501 configured to obtain a plurality of candidate training samples and a standard training sample, where the candidate training sample includes one of a text-type sample, an image-type sample, and an audio-type sample;
a first determination module 502 configured to, for each candidate training sample, determine, according to a preset influence function, an influence degree of the candidate training sample relative to the standard training sample, where the influence function is a function representing a relationship between the influence degree with a first loss of a machine learning model on the candidate training sample and a second loss of the machine learning model on the standard training sample; and
a second determination module 503 configured to determine a target training sample from the plurality of candidate training samples according to the influence degree, where the target training sample is used for training the machine learning model.

Optionally, the influence function is a function representing a relationship between the influence degree with a gradient of the first loss calculated for the candidate training sample at an optimal parameter of a model parameter of the machine learning model, a gradient of the second loss calculated for the standard training sample at the optimal parameter of the model parameter of the machine learning model, and a Hessian matrix corresponding to the machine learning model.

Optionally, the influence function is:

$$\mathcal{L}(z_m, z_t) = -\nabla_{\theta|\theta^*} L(z_t)^T H_{\theta^*}^{-1} \nabla_{\theta|\theta^*} L(z_m)$$

where $\mathcal{L}(z_m, z_t)$ is the influence degree, $z_m$ is the candidate training sample, $z_t$ is the standard training sample, $\theta$ is the model parameter of the machine learning model, $\theta^*$ is the optimal parameter of the machine learning model, $L(z_t)$ is the second loss, $\nabla_{\theta|\theta^*} L(z_t)$ represents a gradient of the second loss calculated for the standard training sample at the optimal parameter $\theta^*$ of the model parameter $\theta$, $H_{\theta^*}$ is the Hessian matrix, $L(z_m)$ is the first loss, and $\nabla_{\theta|\theta^*} L(z_m)$ represents a gradient of the first loss calculated for the candidate training sample at the optimal parameter $\theta^*$ of the model parameter $\theta$.

Optionally, the Hessian matrix is a Kronecker-factored approximate curvature corresponding to the machine learning model.

Optionally, the second determination module 503 is specifically configured to:
select, from the plurality of candidate training samples, a candidate training sample with an influence degree being a target influence degree as the target training sample according to the influence degree, where the target influence degree represents that training the machine learning model on the candidate training sample can reduce the second loss of the machine learning model on the standard training sample.

Optionally, the second determination module 503 includes:

a sample determination unit configured to determine a plurality of initial training samples from the plurality of candidate training samples according to the influence degree;
a clustering unit configured to cluster the plurality of initial training samples according to gradients of initial training samples in the machine learning model to obtain a plurality of clustered clusters; and
a selection unit configured to determine the target training sample from the plurality of initial training samples according to the plurality of clustered clusters.

Optionally, the clustering unit is specifically configured to:

in a case where the initial training sample is sequence data, determine a gradient of each word unit of the initial training sample in the machine learning model; and
determine the gradient of the initial training sample in the machine learning model according to an average value of gradients of all the word units in the machine learning model.

Optionally, the selection unit is specifically configured to:
for each clustered cluster, collect a target number of initial training samples from the initial training samples corresponding to the clustered cluster as the target training sample.

For the logic of the method performed by each functional module in the above apparatus 500 for determining a training sample, reference may be made to the parts of the method related to the above embodiments, which will not be repeated here.

Reference is made to Fig. 6 below, which shows a schematic structural diagram of an electronic device (e.g., a terminal device or a server) 600 suitable for implementing embodiments of the present disclosure. The terminal device in the embodiments of the present disclosure may include, but is not limited to, mobile terminals such as a mobile phone, a notebook computer, a digital broadcasting receiver, a personal digital assistant (PDA), a tablet computer (PAD), a portable multimedia player (PMP), and a vehicle-mounted terminal (e.g., a vehicle-mounted navigation terminal), as well as stationary terminals such as a digital TV and a desktop computer. The electronic device shown in Fig. 6 is only one example and should not impose any limitation on the functions and the range of use of the embodiments of the present disclosure.

As shown in Fig. 6, the electronic device 600 may include a processing apparatus (e.g., a central processing unit, a graphics processing unit, etc.) 601 that may perform various appropriate actions and processes according to a program stored in a read-only memory (ROM) 602 or a program loaded from a storage apparatus 608 into a random-access memory (RAM) 603. The RAM 603 also stores various programs and data required for the operation of the electronic device 600. The processing apparatus 601, the ROM 602, and the RAM 603 are interconnected by means of a bus 604. An input/output (I/O) interface 605 is also connected to the bus 604.

Usually, the following apparatuses may be connected to the I/O interface 605: an input apparatus 606 including, for example, a touchscreen, a touchpad, a keyboard, a mouse, a camera, a microphone, an accelerometer, a gyroscope, or the like; an output apparatus 607 including, for example, a liquid crystal display (LCD), a loudspeaker, a vibrator, or the like; a storage apparatus 608 including, for example, a magnetic tape, a hard disk, or the like; and a communication apparatus 609. The communication apparatus 609 may allow the electronic device 600 to perform wireless or wired communication with other devices to exchange data. While Fig. 6 shows an electronic device 600 having various apparatuses, it should be understood that it is not all of the illustrated apparatuses are necessarily implemented or included. More or fewer apparatuses may alternatively be implemented or provided.

In particular, according to embodiments of the present disclosure, the process described above with reference to the flowchart may be implemented as a computer software program. For example, an embodiment of the present disclosure includes a computer program product, which includes computer programs carried by a non-transitory computer-readable medium. The computer programs include program codes for performing the method shown in the flowchart. In such embodiments, the computer programs may be downloaded and installed from a network through the communication apparatus 609, or installed from the storage apparatus 608, or installed from the ROM 602. When the computer programs are executed by the processing apparatus 601, the above functions defined in the method of the embodiment of the present disclosure are performed.

It should be noted that the above computer-readable medium in the present disclosure may be a computer-readable signal medium or a computer-readable storage medium, or any combination thereof. For example, the computer-readable storage medium may be, but is not limited to, an electric, magnetic, optical, electromagnetic, infrared, or semiconductor system, apparatus, or device, or any combination thereof. More specific examples of the computer-readable storage medium may include, but are not limited to: an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program that may be used by or in combination with an instruction execution system, apparatus, or device. In the present disclosure, the computer-readable signal medium may include a data signal propagated in a baseband or as a part of a carrier and carries computer-readable program codes,. This propagated data signal may adopt many forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus, or device. The program codes contained on the computer-readable medium may be transmitted by any suitable medium, including but not limited to: an electric wire, an fiber-optic cable, RF (radio frequency), etc., or any suitable combination thereof.

In some implementations, the electronic device may perform communication using any network protocol currently known or to be researched and developed in the future, such as HTTP (HyperText Transfer Protocol), and may be interconnected with digital data communication (for example, communication network) in any form or medium. Examples of the communication network include a local area network ("LAN"), a wide area network ("WAN"), an internet (for example, the Internet), a peer-to-peer network (for example, an ad hoc peer-to-peer network), and any network currently known or to be researched and developed in the future.

The above computer-readable medium may be included in the above electronic device, or may exist alone without being assembled into the electronic device.

The computer-readable medium carries one or more programs which, when executed by the electronic device, cause the electronic device to perform the following operations: acquiring a plurality of candidate training samples and a standard training sample, wherein the candidate training sample includes one of a text-type sample, an image-type sample, and an audio-type sample; for each candidate training sample, determining, according to a preset influence function, an influence degree of the candidate training sample relative to the standard training sample, wherein the influence function is a function representing a relationship between the influence degree with a first loss of a machine learning model on the candidate training sample and a second loss of the machine learning model on the standard training sample; and determining a target training sample from the plurality of candidate training samples according to the influence degree, wherein the target training sample is used for training the machine learning model.

The computer program codes for performing the operations of the present disclosure may be written in one or more programming languages or a combination thereof. The programming languages include, but are not limited to, object-oriented programming languages such as Java, Smalltalk, C++, and also conventional procedural programming languages such as "C" programming language or similar programming languages. The program code may be executed entirely on a user computer, partly on a user computer, as a stand-alone software package, partly on a user computer and partly on a remote computer, or entirely on a remote computer or server. In the case of involving the remote computer, the remote computer may be connected to the user computer through any kind of network, including a local area network (LAN) or a wide area network (WAN), or may be connected to an external computer (for example, connected via the Internet using an Internet service provider).

The flowcharts and block diagrams in the drawings illustrate possible architectures, functions, and operations of the system, method, and computer program product according to various embodiments of the present disclosure. In this regard, each block in the flowchart or block diagram may represent a module, a program segment, or a part of code, which includes one or more executable instructions for implementing specified logical functions. It should also be noted that in some alternative implementations, the functions marked in the blocks may occur in a different order than the order marked in the drawings. For example, two blocks shown in succession may actually be executed substantially in parallel, and they may sometimes be executed in the reverse order, depending on the functions involved. It should also be noted that each block in the block diagram and/or flowchart, and the combination of blocks in the block diagram and/or flowchart, may be implemented by a dedicated hardware-based system that performs specified functions or operations, or may be implemented by a combination of dedicated hardware and computer instructions.

The modules described in the embodiments of the present disclosure may be implemented in software or hardware. The name of a module does not constitute a limitation on the module itself under certain circumstances.

The functions described herein above may be performed at least in part by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The above description is only preferred embodiments of the present disclosure and an illustration of the applied technical principles. Those skilled in the art should understand that the scope of disclosure involved in the present disclosure is not limited to the technical solutions formed by the specific combination of the above technical features, but also should cover other technical solutions formed by any combination of the above technical features or their equivalent features without departing from the above disclosed concepts. For example, the technical solution formed by replacing the above features with the technical features having similar functions disclosed in the present disclosure (but not limited thereto).

In addition, although operations are depicted in a specific order, this should not be construed as requiring these operations to be performed in the specific order shown or performed in a sequential order. Under certain circumstances, multitasking and parallel processing may be advantageous. Likewise, although several specific implementation details are included in the above discussion, these should not be interpreted as limitations to the scope of the present disclosure. Certain features that are described in the context of separate embodiments may also be implemented in combination in a single embodiment. Conversely, various features described in the context of a single embodiment may also be implemented in multiple embodiments separately or in any suitable subcombination.

Although the subject matter has been described in language specific to structural features and/or method logical actions, it should be understood that the subject matter defined in the appended claims is not necessarily limited to the specific features or actions described above. On the contrary, the specific features and actions described above are only exemplary forms of implementing the claims. Regarding the apparatus in the above embodiments, the specific manner in which each module performs operations has been described in detail in the embodiments related to the method, and will not be described in detail here.

**Claims**

1. A method for determining a training sample, comprising:

   acquiring a plurality of candidate training samples and a standard training sample (110), wherein the candidate training sample comprises one of a text-type sample, an image-type sample, and an audio-type sample; for each candidate training sample, determining, according to a preset influence function, an influence degree of the candidate training sample relative to the standard training sample (120), wherein the influence function is a function representing a relationship between the influence degree with a first loss of a machine learning model on the candidate training sample and a second loss of the machine learning model on the standard training sample; and determining a target training sample from the plurality of candidate training samples according to the influence degree (130), wherein the target training sample is used for training the machine learning model.

2. The method according to claim 1, wherein the influence function is a function representing a relationship between the influence degree with a gradient of the first loss calculated for the candidate training sample at an optimal parameter of a model parameter of the machine learning model, a gradient of the second loss calculated for the standard training sample at the optimal parameter of the model parameter of the machine learning model, and a Hessian matrix corresponding to the machine learning model.

3. The method according to claim 2, wherein the influence function is:

$$\mathcal{L}(z_m, z_t) = -\nabla_{\theta|\theta^*} L(z_t)^T H_{\theta^*}^{-1} \nabla_{\theta|\theta^*} L(z_m)$$

wherein $\mathcal{L}(z_m, z_t)$ is the influence degree, $z_m$ is the candidate training sample, $z_t$ is the standard training sample, $\theta$ is the model parameter of the machine learning model, $\theta^*$ is the optimal parameter of the machine learning model, $L(z_t)$ is the second loss, $\nabla_{\theta|\theta^*} L(z_t)$ represents a gradient of the second loss calculated for the standard training sample at the optimal parameter $\theta^*$ of the model parameter $\theta$, $H_{\theta^*}$ is the Hessian matrix, $L(z_m)$ is the first loss, and $\nabla_{\theta|\theta^*} L(z_m)$ represents a gradient of the first loss calculated for the candidate training sample at the optimal parameter $\theta^*$ of the model parameter $\theta$.

4. The method according to claim 3, wherein the Hessian matrix is a Kronecker-factored approximate curvature corresponding to the machine learning model.

5. The method according to claim 3, wherein the determining a target training sample from the plurality of candidate training samples according to the influence degree comprises:
   selecting, from the plurality of candidate training samples, a candidate training sample with an influence degree being a target influence degree as the target training sample, according to the influence degree, wherein the target influence degree represents that training the machine learning model on the candidate training sample reduces the second loss of the machine learning model on the standard training sample.

6. The method according to claim 1, wherein the determining a target training sample from the plurality of candidate training samples according to the influence degree comprises:

determining a plurality of initial training samples from the plurality of candidate training samples according to the influence degree (131);
clustering the plurality of initial training samples according to gradients of the plurality of initial training samples in the machine learning model to obtain a plurality of clustered clusters (132); and
determining the target training sample from the plurality of initial training samples according to the plurality of clustered clusters (133).

7. The method according to claim 6, wherein the gradient of the initial training sample in the machine learning model is obtained through the following steps:

In response to the initial training sample is sequence data, determining a gradient, of each word unit of the initial training sample in the machine learning model; and
determining the gradient of the initial training sample in the machine learning model according to an average value of gradients of all the word units in the machine learning model.

8. The method according to claim 6, wherein the determining the target training sample from the plurality of initial training samples according to the plurality of clustered clusters comprises:
for each clustered cluster, collecting a target number of initial training samples from the initial training samples corresponding to the clustered cluster as the target training sample.

9. An apparatus (500) for determining a training sample, comprising:

an obtaining module (501) configured to obtain a plurality of candidate training samples and a standard training sample, wherein the candidate training sample comprises one of a text-type sample, an image-type sample, and an audio-type sample;
a first determination module (502) configured to, for each candidate training sample, determine, according to a preset influence function, an influence degree of the candidate training sample relative to the standard training sample, wherein the influence function is a function representing a relationship between the influence degree with a first loss of a machine learning model on the candidate training sample and a second loss of the machine learning model on the standard training sample; and
a second determination module (503) configured to determine a target training sample from the plurality of candidate training samples according to the influence degree, wherein the target training sample is used for training the machine learning model.

10. The apparatus according to claim 9, wherein the second determination module (503) comprises:

a sample determination unit configured to determine a plurality of initial training samples from the plurality of candidate training samples according to the influence degree;
a clustering unit configured to cluster the plurality of initial training samples according to gradients of the plurality of initial training samples in the machine learning model to obtain a plurality of clustered clusters; and
a selection unit configured to determine the target training sample from the plurality of initial training samples according to the plurality of clustered clusters.

11. The apparatus according to claim 10, wherein the clustering unit is configured to:

In response to the initial training sample is sequence data, determining a gradient, of each word unit of the initial training sample in the machine learning model; and
determining the gradient of the initial training sample in the machine learning model according to an average value of gradients of all the word units in the machine learning model.

12. The apparatus according to claim 10, wherein the selection unit is configured to:
for each clustered cluster, collecting a target number of initial training samples from the initial training samples corresponding to the clustered cluster as the target training sample.

13. A non-transitory computer-readable medium having computer programs stored thereon, wherein the computer programs, when executed by a processing apparatus, implement the method according to any one of claims 1 to 8.

14. An electronic device, comprising:

a storage apparatus having computer programs stored thereon;
a processing apparatus configured to execute the computer programs in the storage apparatus, to implement the method according to any one of claims 1 to 8.

**15.** A computer program product comprising computer programs, wherein the computer programs, when executed by a processor, implement the method according to any one of claims 1 to 8.

Acquiring a plurality of candidate training samples and a standard training sample ⟋—110

For each candidate training sample, determining, according to a preset influence function, an influence degree of the candidate training sample relative to the standard training sample ⟋—120

Determining a target training sample from the plurality of candidate training samples according to the influence degree ⟋—130

Fig.1

Determining a plurality of initial training samples from the plurality of candidate training samples according to the influence degree ⟋—131

Clustering the plurality of initial training samples according to gradients of the initial training samples in the machine learning model to obtain a plurality of clustered clusters ⟋—132

Determining the target training sample from the plurality of initial training samples according to the plurality of clustered clusters ⟋—133

Fig.2

Fig.3

EP 4 621 656 A1

Fig.4

500

Apparatus for determining
training sample

501

Obtaining module

502

First determination
module

503

Second
determination
module

Fig.5

600

Processing apparatus —601    ROM —602    RAM —603

604

I/O interface —605

Input apparatus    Output
apparatus    Storage
apparatus    Communication
apparatus

606    607    608    609

Fig.6

**EP 4 621 656 A1**

<table>
<tr><td colspan="4" align="center">**EUROPEAN SEARCH REPORT**</td><td>**Application Number**<br>EP 25 15 4469</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Xia Mengzhou ET AL: "LESS: Selecting Influential Data for Targeted Instruction Tuning", <br> , <br> 6 February 2024 (2024-02-06), XP093287809, Retrieved from the Internet: URL:https://arxiv.org/abs/2402.04333v1 [retrieved on 2024-02-06] <br> * page 1 - page 4 * <br> ----- | 1-15 | INV. <br> G06N3/09 |
| A | ROGER GROSSE ET AL: "Studying Large Language Model Generalization with Influence Functions", <br> ARXIV.ORG, CORNELL UNIVERSITY LIBRARY, 201 OLIN LIBRARY CORNELL UNIVERSITY ITHACA, NY 14853, <br> 7 August 2023 (2023-08-07), XP091588794, <br> * page 9 - page 17 * <br> ----- | 1-15 | |
| | | | **TECHNICAL FIELDS SEARCHED (IPC)** <br> G06N |

The present search report has been drawn up for all claims

| Place of search | Date of completion of the search | Examiner |
|---|---|---|
| The Hague | 19 June 2025 | Bohn, Patrice |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410330911